# EUROPÄISCHE PATENTSCHRIFT

(11) **EP 3 935 463 B1**
(45) Veröffentlichungstag und Bekanntmachung des Hinweises auf die Patenterteilung: **14.06.2023**
(21) Anmeldenummer: 20706126.8
(22) Anmeldetag: 10.02.2020
(51) Int. Cl.: B60W 40/04, B60W 60/00, B60W 50/023, B60W 30/00, G05D 1/00, B60W 50/00

(54) **VERFAHREN UND VORRICHTUNG ZUM BETREIBEN EINES AUTOMATISIERTEN FAHRZEUGS**
METHOD AND DEVICE FOR OPERATING AN AUTOMATED VEHICLE
PROCÉDÉ ET DISPOSITIF PERMETTANT DE FAIRE FONCTIONNER UN VÉHICULE AUTOMATISÉ

(30) Priorität: 05.03.2019 DE 102019202925
(43) Veröffentlichungstag der Anmeldung: 12.01.2022
(73) Patentinhaber: Robert Bosch GmbH, 70442 Stuttgart (DE)
(72) Erfinder: ARRAMON, Stephanie, 71272 Renningen (DE); RAU, Svetlana, 70378 Stuttgart (DE); FOURNIER, Norman, 70597 Stuttgart (DE); VANDOMMELE, Tjark, 70499 Stuttgart (DE); WILHELM, Ulf, 71409 Schwaikheim (DE)
(86) Internationale Anmeldenummer: PCT/EP2020/053258
(87) Internationale Veröffentlichungsnummer: WO 2020/177980

(56) Entgegenhaltungen:
- EP-A1- 2 107 503
- US-A1- 2018 173 232

## Beschreibung

Die Erfindung betrifft ein Verfahren zum Betreiben eines automatisierten Fahrzeugs. Die Erfindung betrifft weiterhin eine Vorrichtung zum Betreiben eines automatisierten Fahrzeugs. Die Erfindung betrifft ferner ein Computerprogrammprodukt.

### Stand der Technik

Daten aus Umfeldsensoren werden bereits heute genutzt, um spezifische Fahraufgaben eines Fahrzeugs zu übernehmen. Zum Beispiel werden Umfeldsensordaten genutzt, um Notbremsassistenten (AEB, engl. Autonomous Emergency Braking) oder Abstandsregeltempomaten (ACC, engl. Adaptive Cruise Control) zu steuern. Typischerweise werden die Umfeldsensordaten für die Realisierung von Funktionen wie AEB oder ACC von Radarsensoren und/oder Kameras ermittelt. Allen diesen Funktionen gemeinsam ist, dass ihr Wirkfeld stark eingeschränkt ist.

DE 10 2015 222 605 A1 offenbart ein Verfahren zum assistierten, teilautomatisierten, hochautomatisierten, vollautomatisierten oder fahrerlosen Fahren eines Kraftfahrzeuges. Dabei kann vorgesehen sein, dass alle Teilsysteme eine Überwachungsfunktion aufweisen und ihre Leistungsfähigkeit an das Steuergerät übermitteln, wobei ferner vorgesehen sein kann, dass einzelne Teilsysteme die Leistungsfähigkeit quantitativ und andere nur qualitativ übermitteln.

EP 1 369 288 A2 offenbart eine Fahrzeugsteuerung, die ein Fahrzeugsteuerungs-Teilsystem umfasst.

Die Offenlegungsschrift EP 2 107 503 A1 offenbart eine Vorrichtung zum Überwachen eines Fahrzeugumfelds.

Die Offenlegungsschrift US 2018/173232 A1 offenbart ein Verfahren zum Erfassen eines Umfelds eines Fahrzeugs.

### Offenbarung der Erfindung

Eine Aufgabe der Erfindung ist es, ein verbessertes Verfahren zum Betreiben eines automatisierten Fahrzeugs bereit zu stellen.

Die Aufgabe wird gemäß einem ersten Aspekt gelöst mit einem Verfahren zum Betreiben eines automatisierten Fahrzeugs, aufweisend die aufeinanderfolgenden Schritte:
- Erfassen eines Umfelds des Fahrzeugs;
- Bereitstellen von Umfelddaten des erfassten Umfelds;
- Zuführen der Umfelddaten an eine Situationserfassungseinrichtung mit einer definierten Anzahl größer eins von Situationserfassungselementen;
- Rechnerisches Modellieren des Umfelds des Fahrzeugs mittels der Situationserfassungselemente;
- Ansteuern von Fahrerassistenzsystemen mit Ausgangsdaten der Modelle der Situationserfassungselemente;
- Entscheiden mittels einer Entscheidungseinrichtung einer Funktionseinrichtung, welche Ausgangsdaten der Modelle der Situationserfassungselemente zum Ansteuern einer Aktuatoreinrichtung des Fahrzeugs verwendet werden; und
   Ansteuern der Aktuatoreinrichtung des Fahrzeugs mit den entschiedenen Ausgangsdaten.

Vorteilhaft können auf diese Weise automatisiert fahrende Fahrzeuge bis zu Stufe 5 (autonome Fahrzeuge) realisiert werden. Vorteilhaft ist dies mit der Erfindung durch einen schonenden Einsatz von Hardware-Ressourcen möglich, wodurch das Verfahren mit relativ kleinen Steuergeräte realisiert werden kann. Dadurch ist ein Rechenaufwand verringert und es können schnellere Rechenzyklen durchgeführt werden. Im Ergebnis ist dadurch ein echtzeitfähiges System zum Betreiben eines automatisierten Fahrzeugs bereitgestellt.

Gemäß einem zweiten Aspekt wird die Aufgabe gelöst mit einer Vorrichtung zum Betreiben eines automatisierten Fahrzeugs, aufweisend:
- eine Umfeldsensoreinrichtung zum Erfassen eines Umfelds des Fahrzeugs und zum Bereitstellen von Umfelddaten des erfassten Umfelds;
- eine Situationserfassungseinrichtung mit einer definierten Anzahl größer eins von Situationserfassungselementen an die die Umfelddaten zuführbar sind, wobei mittels der Situationserfassungselemente ein rechnerisches Modellieren des Umfelds des Fahrzeugs durchführ bar ist;
- Fahrerassistenzsystemen, die mit Ausgangsdaten der Modelle der Situationserfassungselemente ansteuerbar sind;
- Eine Entscheidungseinrichtung einer Funktionseinrichtung, wobei mittels der Entscheidungseinrichtung entscheidbar ist, welche Ausgangsdaten der Modelle der Situationserfassungselemente zum Ansteuern einer Aktuatoreinrichtung des Fahrzeugs verwendet werden; und
- eine Aktuatoreinrichtung des Fahrzeugs, die mit den entschiedenen Ausgangsdaten ansteuerbar ist.

Vorteilhafte Weiterbildungen des Verfahrens sind Gegenstand von abhängigen Ansprüchen.

Eine vorteilhafte Weiterbildung des Verfahrens sieht vor, dass die Modelle der Situationserfassungselemente unabhängig voneinander synchron ermittelt werden, wobei sich die Modelle der Situationserfassungselemente wenigstens teilweise überlappen. Dadurch ist eine Robustheit des Systems unterstützt, weil bei Ausfall eines Situationserfassungselements ein aktives Fahrassistenzsystem weiterhin betrieben werden kann.

Eine weitere vorteilhafte Weiterbildung des Verfahrens sieht vor, dass die Fahrassistenzsysteme unabhängig voneinander und synchron durchgeführt werden. Auch dadurch ist eine Unabhängigkeit bzw. Robustheit des Verfahrens unterstützt.

Eine weitere vorteilhafte Weiterbildung des Verfahrens sieht vor, dass aus einem Sensor der Umfeldsensoreinrichtung unterschiedliche Daten für unterschiedliche Situationserfassungselemente bereitgestellt werden. Beispielsweise kann vorgesehen sein, dass eine Videokamera zum Erkennen von Fahrbahnen und Objekten genutzt wird, wobei diese verschiedenen Informationen von verschiedenen Situationserfassungselementen genutzt werden.

Eine weitere vorteilhafte Weiterbildung des Verfahrens zeichnet sich dadurch aus, dass mittels einer Selbsteinschätzungseinrichtung jedes Situationserfassungselements ermittelt wird, wie vertrauenswürdig die Modelle des jeweiligen Situationserfassungselements sind. Dadurch wird einem Entscheidungsträger eine Entscheidungshilfe gegeben, welchem Situationserfassungselement vertraut wird, das dann selektiert wird.

Das Verfahren zeichnet sich erfindungsgemäß dadurch aus, dass mittels der Modelle der Situationserfassungselements Daten für alle Fahrassistenzsysteme bereitgestellt werden. Dadurch werden alle Fahrerassistenzsysteme mit denselben Daten der Situationserfassungselemente angesteuert, wodurch ebenfalls eine Robustheit des Verfahrens unterstützt ist.

Das Verfahren sieht erfindungsgemäß vor, dass das jeweilige Fahrassistenzsystem entscheidet, welche Daten welches Situationserfassungselements es verarbeitet. Auch dadurch ist eine Robustheit des Verfahrens vorteilhaft erhöht.

Eine weitere vorteilhafte Weiterbildung des Verfahrens zeichnet sich dadurch aus, dass die Entscheidungseinrichtung der Funktionseinrichtung entscheidet, welche Daten welches Fahrassistenzsystem es verarbeitet. Dadurch wird letztendlich entschieden, welche Daten verarbeitet werden und welchem Aktuator die Daten zugeführt werden.

Eine weitere vorteilhafte Weiterbildung des Verfahrens sieht vor, dass jedes Situationserfassungselement Verhaltensdaten des Fahrzeugs mit jeweils derselben Metrik bewertet, wobei die Metriken der Situationserfassungselemente wenigstens eines aus Folgendem umfasst: Kollisionswahrscheinlichkeit, Ressourcenschonung, Umweltverträglichkeit, Legalität. Dabei ist die wichtigste Metrik eine möglichst geringe Kollisionswahrscheinlichkeit, mittels der eine Kollision des Fahrzeugs weitestgehend vermieden werden kann.

Die Erfindung wird im Folgenden mit weiteren Merkmalen und Vorteilen anhand von mehreren Figuren detailliert beschrieben. Dabei ergeben sich technische Merkmale und Vorteile der beschriebenen Vorrichtung in analoger Weise aus technischen Merkmalen und Vorrichtung aus dem beschriebenen Verfahren.

In den Figuren zeigt:
- Fig. 1: eine prinzipielle Darstellung einer konventionellen Vorrichtung zum Betreiben eines automatisierten Fahrzeugs;
- Fig. 2: eine weitere Darstellung einer weiteren konventionellen Vorrichtung zum Betreiben eines automatisierten Fahrzeugs;
- Fig. 3: eine prinzipielle Darstellung einer ersten Ausführungsform einer vorgeschlagenen Vorrichtung zum Betreiben eines automatisierten Fahrzeugs; und
- Fig. 4: eine prinzipielle Darstellung eines Ablaufdiagramms eines vorgeschlagenen Verfahrens zum Betreiben eines automatisierten Fahrzeugs.

### Beschreibung von Ausführungsformen

Ein Kerngedanke der Erfindung ist es insbesondere, Fahraufgaben in einem möglichst großen Einsatzbereich eines automatisierten Fahrzeugs zu realisieren. Vorteilhaft kann auf diese Weise ein Verfahren für autonomes Fahren bis zur Stufe 5 (Definition der Stufe 5: "die durchgängige Ausführung aller Aspekte der dynamischen Fahraufgabe durch ein automatisiertes Fahrsystem unter allen Fahr- und Umweltbedingungen, die von einem menschlichen Fahrer bewältigt werden können").

Dazu wird erfindungsgemäß ein sogenannter "Multiagenten-Ansatz" vorgeschlagen, der es ermöglicht, autonomes Fahren bis zur Stufe 5 zu realisieren. Jeder sogenannte "Agent" in Form eines Situationserfassungselements 51a...51n vereinfacht dabei das sogenannte "Offene-Welt-Problem" (weltweit mögliches autonomes Fahren auf Stufe 5) mit einem annähernd exakt zu bestimmenden mathematischen Modell. Die verschiedenen Agenten bzw. Situationserfassungselements 51a...51n sind dabei derart ausgebildet, dass ihre Modelle annähernd unabhängige Zustände nutzen.

Beispielsweise befasst sich ein Situationserfassungselement 51a...51n mit der Erfassung von Fahrspuren, ein anderes Situationserfassungselement 51a...51n mit der Erfassung von Objekten, usw. Im Ergebnis deckt die Summe aller Situationserfassungselemente 51a...51n das gesamte, für autonomes Fahren benötigte Wirkfeld des automatisierten Fahrzeugs ab.

Vorteilhaft ist es damit möglich, dass durch die Vereinfachung in ein mathematisch annähernd exakt zu bestimmendes Modell, die Lösung des Offene-Welt-Problems in Echtzeit mit limitierten Hardwareressourcen realisiert werden kann.

Fahrzeuge werden heutzutage in der Regel mit unterschiedlichen Umfeldsensoren (z.B. Radar, Kamera, Ultraschall, Lidar, Infrarotkamera, usw.) ausgestattet. Mithilfe dieser Umfeldsensoren werden Umfelddaten erfasst. Aus diesen Umfelddaten lassen sich dann Funktionen zur Bewältigung spezieller Fahraufgaben realisieren. Üblicherweise sind bestimmte Umfeldsensoren auf spezielle Fahraufgaben spezialisiert, z.B. Ultraschallsensoren für Parkaufgaben, Radarsensoren für Abstandsregeltempomaten, usw.

Im Hinblick auf Funktionen des autonomen Fahrens wird vorgeschlagen, dass eine Kombination aus mehreren unterschiedlichen Umfeldsensoren vorgesehen wird, um eine hardwaretechnische Redundanz zu schaffen. Vorgeschlagen wird ein Verfahren, welches es ermöglicht, autonomes Fahren mit hard- und softwaretechnischer Redundanz zu realisieren.

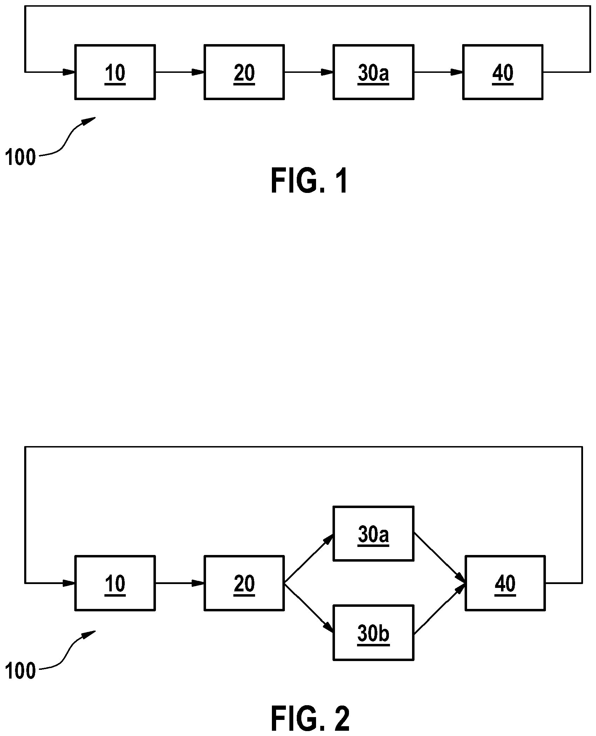

Ein Fahrassistenzsystem ist ein System, welches eine Fahraufgabe lösen soll, zum Beispiel Spur halten. Typischerweise funktioniert ein Fahrerassistenzsystem wie in Fig. 1 dargestellt.

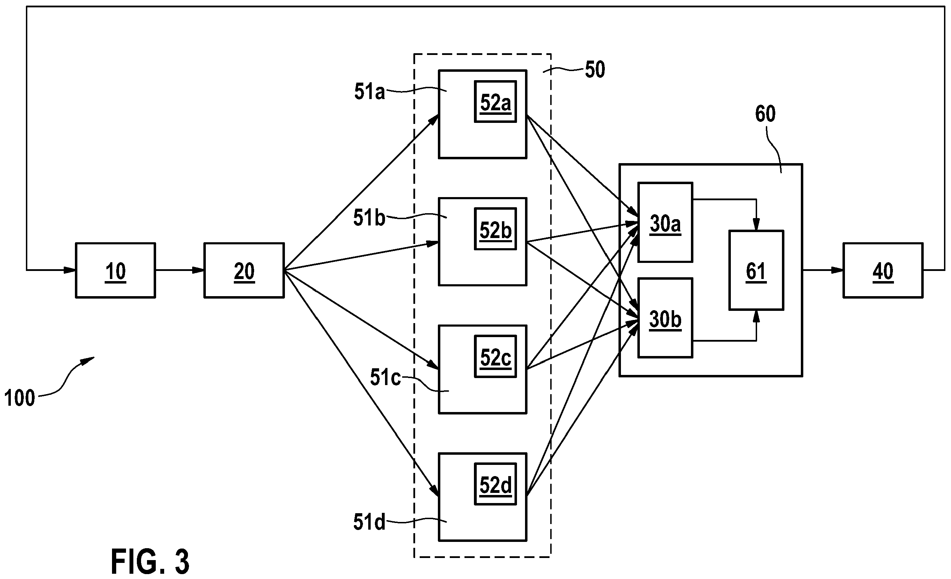

Eine Umfeldsensoreinrichtung 10 wird zur Ermittlung von Umfelddaten 20 verwendet. Die Umfelddaten 20 werden in einem Fahrassistenzsystem 30a analysiert, wobei auf Basis der Ergebnisse dieser Analyse eine Lösung der Fahraufgabe vorgeschlagen wird. Mit dieser Lösung der Fahraufgabe wird dann eine Aktuatoreinrichtung 40, z.B. Form von Lenkung und/oder Bremse des Fahrzeugs (nicht dargestellt) angesteuert. Wenn ein Fahrzeug mehrere Fahrassistenzsysteme 30a...30n aufweist, so kann es auch mehrere parallele Instanzen einer derartigen Logik geben, wie beispielsweise in Fig. 2 dargestellt. Fig. 3 zeigt eine Ausführungsform einer erfindungsgemäßen Vorrichtung 100 zum Betreiben eines automatisierten Fahrzeugs.

Man erkennt, dass in dem hier vorgestellten Verfahren zusätzlich eine Situationserfassungseinrichtung 50 in den geschlossenen (closed loop) Informationspfad eingefügt ist. Wie schon bei den oben beschriebenen Fahrassistenzsysteme 30a...30n beginnt der Informationsfluss bei der Umfeldsensoreinrichtung 10.

Diese ermitteln Umfelddaten 20, wobei die Umfelddaten aus verschiedenen Umfeldsensoren (z.B. Ultraschall, Radar, Lidar, Kamera, usw.) der Umfeldsensoreinrichtung 10 plausibilisiert und fusioniert. Die Umfelddaten 20 werden vorzugsweise von unterschiedlichen Sensortypen bereitgestellt, wodurch die Sensordaten der verschiedenen Sensoren verglichen werden. Ist z.B. ein Objekt durch einen Radarsensor und durch einen Videosensor erkannt worden, dann ist die Wahrscheinlichkeit hoch, dass dieses Objekt tatsächlich existiert. Die derart fusionierten und plausibilisierten Informationen werden an die Situationserfassungseinrichtung 50 weitergeleitet. In der Situationserfassungseinrichtung 50 werden diese aufbereiteten Umfelddaten 20 von mehreren Agenten in Form von Situationserfassungselementen 51a...51n weiterverarbeitet.

Die Situationserfassungselemente 51a...51n der Situationserfassungseinrichtung 50 abstrahieren das Umfeld des Fahrzeugs in vereinfachende mathematische Modelle. Dabei ist jedes Situationserfassungselement 51a...51n der Situationserfassungseinrichtung 50 derart ausgebildet bzw. programmiert, dass es annähernd unabhängige Informationen nutzt. Beispielsweise kann mittels eines Situationserfassungselements 51a...51n Freiheitsgrade eines Objekts eingeschränkt werden, z.B. eine Bewegung des Fahrzeugs bei Geradeausfahrt auf einer ebenen Autobahn in z-Richtung ausgeschlossen werden. So kann z.B. ein Situationserfassungselement 51a...51n dafür vorgesehen sein, basierend auf den, wie vorgehend beschrieben, aufbereiteten Umfelddaten Fahrbahnmarkierungen bzw. Fahrspuren zu erkennen, ein anderes Situationserfassungselement 51a...51n hingegen, basierend auf den genannten Umfelddaten eine Wechselbeziehung zwischen bewegten Objekten zu ermitteln, usw. Jedes Situationserfassungselement 51a...51n übernimmt somit die Aufgabe, verschiedene Verhalten des Fahrzeugs mittels spezifischer Metriken (z.B. Kollisionswahrscheinlichkeit, Ressourcenschonung, Umweltverträglichkeit, Legalität eines Fahrzeugverhaltens, usw.) zu bewerten. Der Metrik Kollisionswahrscheinlichkeit zwischen Objekten wird dabei in der Regel die höchste Priorität eingeräumt. Alle Situationserfassungselemente 51a... 51n nutzen vorzugsweise dieselben Metriken, so dass dadurch die verschiedenen Situationserfassungselemente 51a...51n und die daraus generierten Verhalten miteinander verglichen werden können.

Exemplarische Verhalten des Fahrzeugs sind "In der Spur fahren", "Spurwechsel durchführen", "Abbremsen", "Beschleunigen", "Ansteuern eines Parkplatzes", usw. Folgende Situationserfassungselemente 51a...51n können zum Beispiel überlappende Wirkfelder haben:
Situationserfassungselement A: Betrachtung aller Objekte, die einer Spur zugeordnet werden können
Situationserfassungselement B: Betrachtung aller Objekte

In diesem Beispiel sind alle vom Situationserfassungselement A erfassten Objekte im Wirkfeld von Situationserfassungselement B. Umgekehrt gilt diese Aussage nicht.

Die Bewertung der verschiedenen Verhalten wird durch einen generischen Satz von Metriken realisiert, wobei jedes Verhalten durch jedes Situationserfassungselement 51a...51n mit der ihm eigenen spezifischen Metrik bewertet wird.

Neben der Bewertung des Verhaltens ist es eine weitere Aufgabe jedes Situationserfassungselement 51a...51n, eine Selbsteinschätzung mittels einer Selbsteinschätzungseinrichtung 52a...52n abzugeben. Diese Selbsteinschätzung sagt aus, wie vertrauenswürdig die Bewertungen der Verhalten durch das jeweilige Situationserfassungselement 51a...51n sind. Die Selbsteinschätzung jedes Situationserfassungselements 51a...51n wird vorzugsweise auf Basis von Gütemaßen der Eingangssignale, die das jeweilige Situationserfassungselement 51a...51n für seine Berechnungen nutzt, berechnet. Außerdem kann überprüft werden, ob die Grundannahmen des Situationserfassungselements 51a...51n in der aktuellen Situation eingehalten werden können. Die bewerteten Verhalten und die Selbsteinschätzungen der Situationserfassungselemente 51a...51n werden von der Situationserfassungseinrichtung 50 an eine Funktionseinrichtung 60 mit einer Entscheidungseinrichtung 61 weitergeleitet.

In der Funktionseinrichtung 60 werden die bewerteten Verhalten genutzt, um die diversen Fahrassistenzsysteme 30a...30n (z.B. AEB, ACC, LKA (engl. lane keeping assist), usw.), die die Fahraufgaben durchführen sollen, zu realisieren. Dabei kann in einem definierten Zeitrahmen immer nur ein einzelnes Fahrassistenzsystem 30a...30n aktiv sein, da die diversen Fahrassistenzsysteme 30a...30n miteinander in Konkurrenz stehen. Dabei werden die verschiedenen bewerteten Verhalten des Fahrzeugs in Form von plausibilisierten und fusionierten Umweltdaten miteinander verglichen. Dabei wird diejenige Funktion selektiert, die mit dem zugehörigen Verhalten die gewünschte Fahraufgabe bestmöglich erfüllt und dabei für das Fahrzeug die geringste Kollisionswahrscheinlichkeit bzw. Kollisionsgefahr bedeutet.

Wenn ein Situationserfassungselement 51a...51n meldet, dass seine Selbsteinschätzung sehr gering ist, so kann die Funktionseinrichtung 60 zum Beispiel die Bewertung dieses Situationserfassungselements 51a... 51n ignorieren und die Bewertung eines anderen Situationserfassungselements 51a...51n nutzen. Schließlich werden auf Basis der Entscheidung für ein Verhalten und der dazugehörigen Funktion die Aktuatoren der Aktuatoreinrichtung 40, z.B. in Form von Lenkung und/oder Bremse des Fahrzeugs angesteuert. Im Falle von ACC als selektiertem Fahrassistenzsystem 30a...30n wird typischerweise der Motor des Fahrzeugs angesteuert. Im Fall von LKA als selektiertem Fahrassistenzsystem wird typischerweise die Lenkung des Fahrzeugs angesteuert. Dabei kann beispielsweise vorgesehen sein, dass die Lenkung mit Trajektoriendaten angesteuert wird. Im Ergebnis führt somit das Fahrzeug seine Fahraufgabe gemäß dem bewerteten Verhalten aus.

Optional kann auch vorgesehen sein, dass ein Fahrassistenzsystem 30a...30n durch mehrere, unterschiedliche Situationserfassungselemente 51a...51n angesteuert wird. Dabei ist es aber nicht unbedingt erforderlich, dass jedes Situationserfassungselement 51a...51n jede Funktion realisieren kann.

Das vorgeschlagene Verfahren weist gegenüber klassischen konventionellen Fahrassistenzsystemen insbesondere folgende Vorteile auf:
- Durch die Situationserfassungselemente 51a...51n wird eine Abstrahierung in einfache mathematische Modelle der Umwelt durchgeführt, wodurch Hardwareressourcen geschont werden
- Durch die Situationserfassungselemente 51a...51n kann Rechenzeit verkürzt und somit ein echtzeitfähiges System bereitgestellt werden
- Durch die Bereitstellung mehrerer Situationserfassungselemente 51a...51n mit überlappendem Wirkfeld wird eine softwaretechnische Redundanz geschaffen, zusätzlich zur hardwaretechnischen Redundanz durch mehrere Umfeldsensortypen der Umfeldsensoreinrichtung 10. Im Ergebnis ist dadurch das System auch bei einem Ausfall eines Situationserfassungselements 51a...51n weiter funktionsfähig
- Spezialaufgaben können durch die Entwicklung dedizierter Agenten gelöst werden. Beispielsweise könnte ein Situationserfassungselement vorgesehen sein, das nur auf den Egofahrzeug-Daten basiert, wenn z.B. alle Umfeldsensoren ausfallen. Dieses Situationserfassungselement könnte genutzt werden, um das Fahrzeug abzubremsen oder die Fahraufgabe vollständig an den menschlichen Fahrer zu übergeben.

Vorzugsweise ist die Vorrichtung 100 als ein elektronisches Steuergerät des Fahrzeugs ausgebildet, auf welchem ein Computerprogrammprodukt (z.B. Programmcode in Form von C⁺⁺) ausgeführt wird.

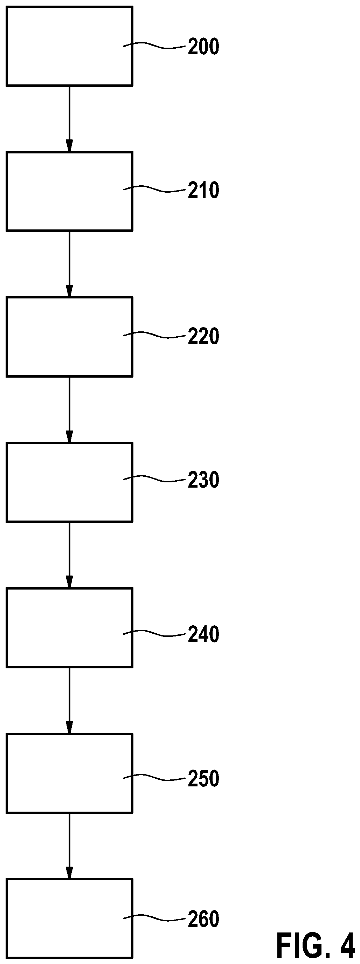

Fig. 4 zeigt einen prinzipiellen Ablauf eines vorgeschlagenen Verfahrens zum Betreiben eines automatisierten Fahrzeugs.

In einem Schritt 200 wird ein Erfassen eines Umfelds des Fahrzeugs durchgeführt.

In einem Schritt 210 werden Umfelddaten 20 des erfassten Umfelds bereitgestellt.

In einem Schritt 220 erfolgt ein Zuführen der Umfelddaten 20 an eine Situationserfassungseinrichtung 50 mit einer definierten Anzahl größer eins von Situationserfassungselementen 51a...51n.

In einem Schritt 230 wird ein rechnerisches Modellieren des Umfelds des Fahrzeugs mittels der Situationserfassungselemente 51a...51n durchgeführt.

In einem Schritt 240 wird ein Ansteuern von Fahrerassistenzsystemen 30a...30n mit Ausgangsdaten der Modelle der Situationserfassungselemente 51a...51n durchgeführt.

In einem Schritt 250 wird ein Entscheiden mittels einer Entscheidungseinrichtung 61 realisiert, welche Ausgangsdaten der Modelle der Situationserfassungselemente 51a...51n zum Ansteuern einer Aktuatoreinrichtung 40 des Fahrzeugs verwendet werden.

In einem Schritt 260 wird die Aktuatoreinrichtung 40 des Fahrzeugs mit den entschiedenen Ausgangsdaten angesteuert.

Vorteilhaft lässt sich das erfindungsgemäße Verfahren als eine Software implementieren, die beispielsweise auf einem elektronischen Steuergerät im Fahrzeug oder cloud-basiert auf einer Servereinrichtung abläuft. Eine einfache Adaptierbarkeit des Verfahrens ist auf diese Weise unterstützt.

Der Fachmann wird die Merkmale der Erfindung in geeigneter Weise abändern und/oder miteinander kombinieren, ohne vom Kern der Erfindung abzuweichen.

## Patentansprüche

1. Verfahren zum Betreiben eines automatisierten Fahrzeugs, mit den aufeinander folgenden Schritten:
- Erfassen eines Umfelds des Fahrzeugs;
- Bereitstellen von Umfelddaten (20) des erfassten Umfelds;
- Zuführen der Umfelddaten (20) an eine Situationserfassungseinrichtung (50) mit einer definierten Anzahl größer eins von Situationserfassungselementen (51a...51n);
- Rechnerisches Modellieren des Umfelds des Fahrzeugs mittels der Situationserfassungselemente (51a...51n);
- Ansteuern von Fahrerassistenzsystemen (30a...30n) mit Ausgangsdaten der Modelle der Situationserfassungselemente (51a..51n);
- Entscheiden mittels einer Entscheidungseinrichtung (61) einer Funktionseinrichtung (60), welche Ausgangsdaten der Modelle der Situationserfassungselemente (51a...51n) zum Ansteuern einer Aktuatoreinrichtung (40) des Fahrzeugs verwendet werden; und
- Ansteuern der Aktuatoreinrichtung (40) des Fahrzeugs mit den entschiedenen Ausgangsdaten,
- wobei mittels der Modelle der Situationserfassungselemente (51a...51n) Daten für alle Fahrassistenzsysteme (30a...30n) bereitgestellt werden,
- wobei das jeweilige Fahrassistenzsystem (30a...30n) entscheidet, welche Daten welches Situationserfassungselements (51a...51n) es verarbeitet.

2. Verfahren nach Anspruch 1, **dadurch gekennzeichnet, dass** die Modelle der Situationserfassungselemente (51a...51n) unabhängig voneinander synchron ermittelt werden, wobei sich die Modelle der Situationserfassungselemente (51a...51n) wenigstens teilweise überlappen.

3. Verfahren nach Anspruch 1 oder 2, wobei die Fahrerassistenzsysteme (30a...30n) unabhängig voneinander und synchron durchgeführt werden.

4. Verfahren nach einem der vorhergehenden Ansprüche, **dadurch gekennzeichnet, dass** aus einem Sensor der Umfeldsensoreinrichtung (10) unterschiedliche Daten für unterschiedliche Situationserfassungselemente (51a..51n) bereitgestellt werden.

5. Verfahren nach einem der vorhergehenden Ansprüche, wobei mittels einer Selbsteinschätzungseinrichtung (52a...52n) jedes Situationserfassungs-elements (51a..51n) ermittelt wird, wie vertrauenswürdig die Modelle des jeweiligen Situationserfassungselements (51a...51n) sind.

6. Verfahren nach einem der vorhergehenden Ansprüche, wobei die Entscheidungseinrichtung (61) der Funktionseinrichtung (60) entscheidet, welche Daten welches Fahrassistenzsystem (30a...30n) es verarbeitet.

7. Verfahren nach einem der vorhergehenden Ansprüche, wobei jedes Situationserfassungselement (51a...51n) Verhaltensdaten des Fahrzeugs mit jeweils derselben Metrik bewertet, wobei die Metriken der Situationserfassungselemente (51a...51n) wenigstens eines aus Folgendem umfassen: Kollisionswahrscheinlichkeit, Ressourcenschonung, Umweltverträglichkeit, Legalität.

8. Vorrichtung (100) zum Betreiben eines automatisierten Fahrzeugs, aufweisend:
- eine Umfeldsensoreinrichtung (10) zum Erfassen eines Umfelds des Fahrzeugs und zum Bereitstellen von Umfelddaten (20) des erfassten Umfelds;
- eine Situationserfassungseinrichtung (50) mit einer definierten Anzahl größer eins von Situationserfassungselementen (51a...51n) an die die Umfelddaten (20) zuführbar sind, wobei mittels der Situationserfassungselemente (51a...51n) ein rechnerisches Modellieren des Umfelds des Fahrzeugs durchführbar ist;
- Fahrerassistenzsystemen (30a...30n), die mit Ausgangsdaten der Modelle der Situationserfassungselemente (51a..51n) ansteuerbar sind;
- eine Entscheidungseinrichtung (61) einer Funktionseinrichtung (60), wobei mittels der Entscheidungseinrichtung (61) entscheidbar ist, welche Ausgangsdaten der Modelle der Situationserfassungselemente (51a...51n) zum Ansteuern einer Aktuatoreinrichtung (40) des Fahrzeugs verwendet werden; und
- eine Aktuatoreinrichtung (40) des Fahrzeugs, die mit den entschiedenen Ausgangsdaten ansteuerbar ist,
- wobei mittels der Modelle der Situationserfassungselemente (51a...51n) Daten für alle Fahrassistenzsysteme (30a...30n) bereitgestellt werden,
- wobei das jeweilige Fahrassistenzsystem (30a...30n) entscheidet, welche Daten welches Situationserfassungselements (51a...51n) es verarbeitet.

9. Vorrichtung (100) nach Anspruch 8, **dadurch gekennzeichnet, dass** die Vorrichtung als ein elektronisches Steuergerät des Fahrzeugs ausgebildet ist.

10. Computerprogrammprodukt mit Programmcodemitteln zur Durchführung des Verfahrens nach einem der Ansprüche 1 bis 7, wenn es auf einer elektronischen Vorrichtung (100) zum Betreiben eines automatisierten Fahrzeugs abläuft oder auf einem computerlesbaren Datenträger gespeichert ist.

## Claims

1. Method for operating an automated vehicle, having the following successive steps:
- capturing an environment of the vehicle;
- providing environmental data (20) relating to the captured environment;
- supplying the environmental data (20) to a situation capture device (50) having a defined number of situation capture elements (51a...51n) of greater than one ;
- computationally modelling the environment of the vehicle by means of the situation capture elements (51a...51n) ;
- controlling driver assistance systems (30a...30n) using output data of the models from the situation capture elements (51a...51n);
- using a decision device (61) of a functional device (60) to decide which output data of the models from the situation capture elements (51a...51n) are used to control an actuator device (40) of the vehicle; and
- controlling the actuator device (40) of the vehicle using the decided output data,
- wherein data for all driving assistance systems (30a...30n) are provided by means of the models from the situation capture elements (51a...51n),
- wherein the respective driving assistance system (30a...30n) decides which data from which situation capture element (51a...51n) it processes.

2. Method according to Claim 1, **characterized in that** the models from the situation capture elements (51a...51n) are synchronously determined independently of one another, wherein the models from the situation capture elements (51a...51n) at least partially overlap.

3. Method according to Claim 1 or 2, wherein the driver assistance systems (30a...30n) are carried out synchronously and independently of one another.

4. Method according to one of the preceding claims, **characterized in that** different data are provided for different situation capture elements (51a...51n) from a sensor of the environmental sensor device (10).

5. Method according to one of the preceding claims, wherein a self-assessment device (52a...52n) of each situation capture element (51a...51n) is used to determine how trustworthy the models from the respective situation capture element (51a...51n) are.

6. Method according to one of the preceding claims, wherein the decision device (61) of the functional device (60) decides which data from which driving assistance system (30a...30n) it processes.

7. Method according to one of the preceding claims, wherein each situation capture element (51a...51n) assesses behavioural data relating to the vehicle using the same metric in each case, wherein the metrics of the situation capture elements (51a...51n) comprise at least one of the following: collision probability, resource conservation, environmental compatibility, legality.

8. Apparatus (100) for operating an automated vehicle, having:
- an environmental sensor device (10) for capturing an environment of the vehicle and for providing environmental data (20) relating to the captured environment;
- a situation capture device (50) having a defined number of situation capture elements (51a...51n) of greater than one, to which the environmental data (20) can be supplied, wherein the environment of the vehicle can be computationally modelled by means of the situation capture elements (51a...51n);
- driver assistance systems (30a...30n) which can be controlled using output data of the models from the situation capture elements (51a...51n);
- a decision device (61) of a functional device (60), wherein the decision device (61) can be used to decide which output data of the models from the situation capture elements (51a...51n) are used to control an actuator device (40) of the vehicle; and
- an actuator device (40) of the vehicle that can be controlled using the decided output data,
- wherein data for all driving assistance systems (30a...30n) are provided by means of the models from the situation capture elements (51a...51n),
- wherein the respective driving assistance system (30a...30n) decides which data from which situation capture element (51a...51n) it processes.

9. Apparatus (100) according to Claim 8, **characterized in that** the apparatus is in the form of an electronic control unit of the vehicle.

10. Computer program product having program code means for carrying out the method according to one of Claims 1 to 7 when it runs on an electronic apparatus (100) for operating an automated vehicle or is stored on a computer-readable data storage medium.

## Revendications

1. Procédé de fonctionnement d'un véhicule automatisé, ledit procédé comprenant les étapes successives suivantes :
- détecter un environnement du véhicule ;
- fournir des données d'environnement (20) de l'environnement détecté ;
- amener les données d'environnement (20) à un module de détection de situation (50) avec un nombre défini, supérieur à un, d'éléments de détection de situation (51a...51n) ;
- effectuer une modélisation informatique de l'environnement du véhicule à l'aide des éléments de détection de situation (51a...51n) ;
- commander des systèmes d'aide à la conduite (30a...30n) avec des données de sortie des modèles des éléments de détection de situation (51a...51n) ;
- décider au moyen d'un module de décision (61) d'un module fonctionnel (60) quelles données de sortie des modèles des éléments de détection de situation (51a...51n) sont utilisées pour commander un module d'actionnement (40) du véhicule ; et
- commander le module d'actionnement (40) du véhicule avec les données de sortie décidées,
- les modèles des éléments de détection de situation (51a...51n) fournissant des données pour tous les systèmes d'aide à la conduite (30a...30n),
- le système d'aide à la conduite respectif (30a...30n) décidant quelles données de quel élément de détection de situation (51a...51n) il traite.

2. Procédé selon la revendication 1, **caractérisé en ce que** les modèles des éléments de détection de situation (51a...51n) sont déterminés de façon synchrone indépendamment les uns des autres, les modèles des éléments de détection de situation (51a...51n) se chevauchant au moins partiellement.

3. Procédé selon la revendication 1 ou 2, les systèmes d'aide à la conduite (30a...30n) étant exécutés de manière indépendante et synchrone.

4. Procédé selon l'une des revendications précédentes, **caractérisé en ce que** différentes données pour différents éléments de détection de situation (51a...51n) sont fournies à partir d'un capteur du module de détection d'environnement (10).

5. Procédé selon l'une des revendications précédentes, un module d'auto-évaluation (52a...52n) de chaque élément de détection de situation (51a...51n) déterminant la fiabilité des modèles de l'élément de détection de situation respectif (51a...51n).

6. Procédé selon l'une des revendications précédentes, le module de décision (61) du module fonctionnel (60) décidant quelles données de quel système d'aide à la conduite (30a...30n) il traite.

7. Procédé selon l'une des revendications précédentes, chaque élément de détection de situation (51a...51n) évaluant des données de comportement du véhicule avec les mêmes métriques, les métriques des éléments de détection de situation (51a...51n) comprenant l'un au moins des éléments suivants : probabilité de collision, conservation des ressources, durabilité environnementale, légalité.

8. Dispositif (100) destiné à faire fonctionner un véhicule automatisé, ledit dispositif comprenant :
- un module de détection d'environnement (10) destiné à détecter un environnement du véhicule et à fournir des données d'environnement (20) de l'environnement détecté ;
- un module de détection de situation (50) comprenant un nombre défini, supérieur à un, d'éléments de détection de situation (51a...51n) auquel les données d'environnement (20) peuvent être amenées, les éléments de détection de situation (51a...51n) pouvant effectuer une modélisation informatique de l'environnement du véhicule ;
- des systèmes d'aide à la conduite (30a...30n) qui peuvent être commandés avec des données de sortie des modèles des éléments de détection de situation (51a...51n) ;
- un module de décision (61) d'un module fonctionnel (60), le module de décision (61) permettant de décider quelles données de sortie des modèles des éléments de détection de situation (51a...51n) sont utilisées pour commander un module d'actionnement (40) du véhicule ; et
- un module d'actionnement (40) du véhicule qui peut être commandé avec les données de sortie décidées,
- les modèles des éléments de détection de situation (51a...51n) fournissant des données pour tous les systèmes d'aide à la conduite (30a...30n),
- le système d'aide à la conduite respectif (30a...30n) décidant quelles données de quel élément de détection de situation (51a...51n) il traite.

9. Dispositif (100) selon la revendication 8, **caractérisé en ce que** le module est conçu comme une unité de commande électronique du véhicule.

10. Progiciel comprenant des moyens de code programme destinés à la mise en œuvre du procédé selon l'une des revendications 1 à 7 lorsqu'il est exécuté sur un dispositif électronique (100) destiné à faire fonctionner un véhicule automatisé ou est mémorisé sur un support de données lisible par ordinateur.
